**Europäisches Patentamt**

(19) **European Patent Office**

**Office européen des brevets**

(11) Publication number: **0 039 021**
**A2**

---

(12) **EUROPEAN PATENT APPLICATION**

(21) Application number: **81102971.9**

(22) Date of filing: **16.04.81**

(51) Int. Cl.³: **B 60 B 1/04**

---

(30) Priority: **30.04.80 JP 57255/80**

(43) Date of publication of application:
**04.11.81 Bulletin 81/44**

(84) Designated Contracting States:
**BE FR**

(71) Applicant: Yamaha Motor Co., Ltd.
2500 Shingai
Iwata-shi Shizuoka-ken(JP)

(72) Inventor: Suzuki, Toshiyuki
2384-8 Nakamizo-cho Shimada-shi
Shizuoka-ken(JP)

(72) Inventor: Amagi, Kiyoshi
7-6 Kinzyogaoka Daishozimitsu-machi
Kaga-shi Ishikawa-ken(JP)

(74) Representative: Patentanwälte Grünecker,
Dr.Kinkeldey Dr.Stockmair, Dr.Schumann,Jakob,
Dr.Bezold Meister, Hilgers, Dr.Meyer-Plath
Maximilianstrasse 43
D-8000 München 22(DE)

---

(54) **Block-assembled spoked wheel.**

(57) A spoked wheel of the type in which two flanges (9) formed on a hub (7) and a rim (2) are fastened and fixed by means of a number of spokes (1). In order to permit a remarkable increase in the number of spokes so that the mounting operation does not become too complicated, a plurality of adjacent spokes are grouped into one block (b), said spokes belonging to such a block are fitted on the same side of the same flange and are made to extend substantially in the same direction so that they are fastened by means of corresponding nipples (5) to mounting holes (3) which, for each block, are formed on the same circumferential line (x or y) of said rim.

Fig. 1

EP 0 039 021 A2

PATENTANWÄLTE

REPRESENTATIVES BEFORE THE
EUROPEAN PATENT OFFICE

**0039021**

A. GRÜNECKER
DIPL.-ING

H. KINKELDEY
DR.-ING

W. STOCKMAIR
DR.-ING AeE (CALTECH)

K. SCHUMANN
DR RER NAT DIPL.-PHYS

P. H. JAKOB
DIPL.-ING

G. BEZOLD
DR RER NAT.- DIPL-CHEM

8 MÜNCHEN 22
MAXIMILIANSTRASSE 43

## Block-Assembled Spoked Wheel

The invention relates to a spoked wheel for two-wheeled vehicles, especially for motor-cycles.

When in use, the spokes of a spoked wheel are subject to tensile forces, as they are screwed and fastened to corresponding nipples which are provided in spoke mounting holes as arranged in the wheel's rim. If the tension thus applied falls to zero or less, the nipples become loose and the spokes slacken. Therefore, it is desirable for the spokes to have quite a large extension at a pre-set tension, i.e., to have such a high spring effect that the variations in applied loads which are caused by the function of the wheel rotations can be easily absorbed by their elastic deformations. It follows that thin spokes are preferable to thick spokes, although the latter have a higher rigidity.

However, if thin spokes are used, it is necessary to increase the number of spokes in order to meet the requirements for sufficient strength.

The arrangement of an increased number of spokes results however, in the respective mounting operations becoming too complicated and cumbersome, as the individual spokes intersect in a complex manner within a restricted area.

The invention as claimed, is intended to remedy these drawbacks. It solves the problem of providing a remarkably increased number of spokes and yet permitting an easy assembly of said spokes.

The advantages offered by the invention are mainly that an increased number of spokes can be easily assembled, so that thinner spokes can be used whilst being prevented from being slackened, as a plurality of adjacent spokes have been grouped into neighbouring blocks, the spokes belonging to an individual block being fitted at the same hub flange and being made to extend substantially in the same direction and being, by means of corresponding nipples, fastened to the rim in mounting holes which for each block of spokes are provided in the same circumferential line of the rim. All in all, the invention provides a remarkable improvement in the art of spoked wheel manufacture.

One way of carrying out the invention is described in detail below, with reference to the drawings which illustrate only one specific embodiment of the invention in which:
Figure 1 is a front elevation showing a portion of a block-assembled spoke wheel, in accordance with the invention;
Figure 2 is a sectional side elevation of same;
Figure 3 is a view showing a portion of the rim, as taken from arrow III in Figure 1;

Figure 4 is a view showing a portion of a partially-
modified rim;

Figure 5 is a sectional view showing the fastened
condition of a spoke to a nipple;

Figure 6 is a view showing a portion of the rim;

Figure 7 is a front elevation showing a portion of
a spoked wheel according to the prior art.


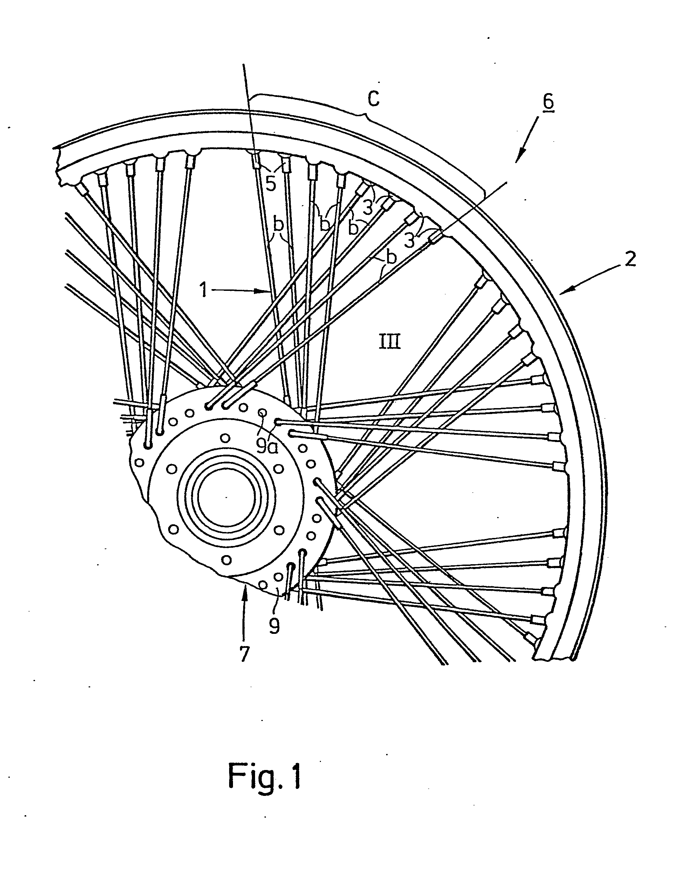

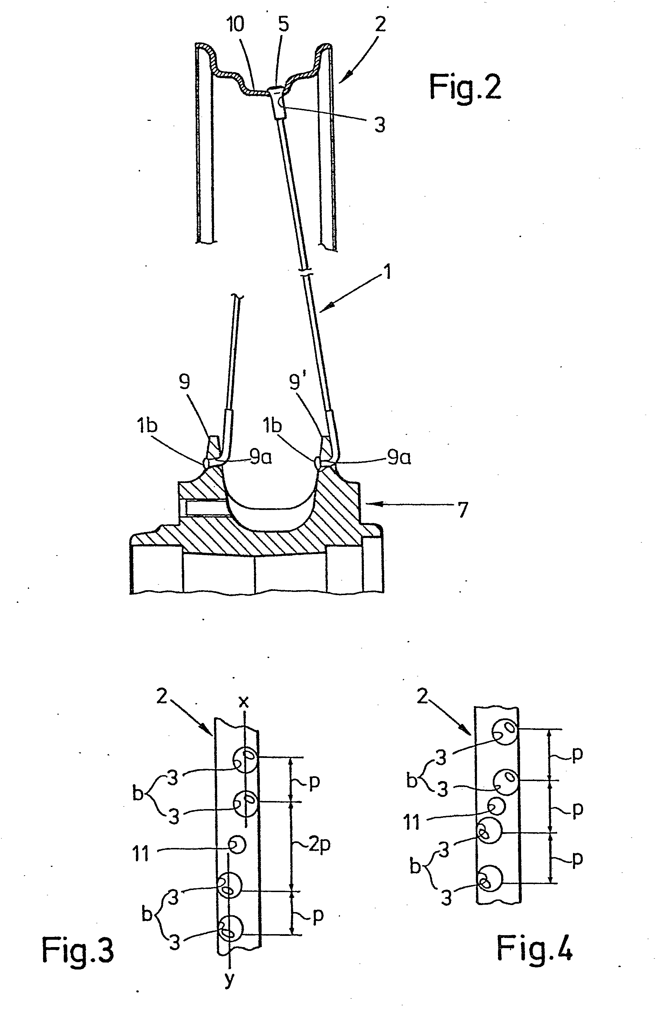

As shown in Figure 1, a block-assembled spoked wheel 6
comprises a rim 2, a hub 7 and a number of spokes 1,
which are mounted to extend under tension between the
rim and the hub.  The hub 7 is formed, as shown in
Figure 2, on its circumference with a right hand
flange 9 and left hand flange 9', each provided with
a number of holes 9a for the spokes.  The holes are
arranged at a predetermined pitch P and are furthermore
arranged so that the opposing holes in the right and
left flanges are coaxial.  Further, the rim 2 is formed
in its central part by a drop portion 10, in which a
number of mounting holes 3 for mounting nipples 5 are
provided.  Of said mounting holes 3, two neighbouring
holes are always grouped into one block b, as shown in
Figure 3, so that the two holes 3 belonging to one
block, are arranged on a first circumferential line x
of the rim 2, whereas the two holes 3 belonging to the
adjacent block b are arranged on a second circumferential
line y of the rim.  As circumferential lines x and y
are provided in spaced relationship on different planes,
the blocks are zigzagged.

In accordance with a preferred embodiment of the
invention, the holes 3 belonging to four of such blocks,
i.e., the eight adjacent holes 3 of four of such blocks,
are arranged at the same pitch P and are assembled into
one group C, as shown in Figure 1.

The pitch P between the adjacent groups C of blocks b is larger than the predetermined pitch P between the adjacent spokes which form said groups C, so that said mounting holes 3 are arranged at irregular pitches as a hole.  Preferably, the pitch P between the adjacent groups C should be twice as large as the pitch which is provided between the members of each group, as shown in Figure 3.

Incidentally, numeral 11 in Figure 3 indicates a valve hole which is formed in the interval between adjacent groups C, said interval being twice the length of the pitch P.

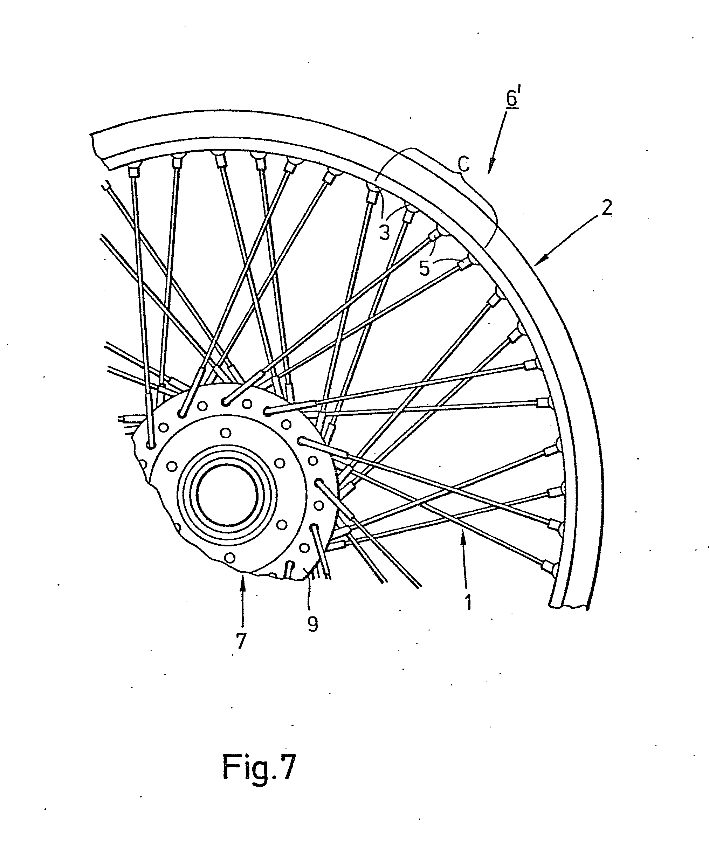

Moreover, the two adjacent spokes 1, which form one block b, are fitted in flange 9 or 9' of the hub 7 on the same side and in such a manner as to extend substantially in the same direction, so that their heads 1b are fixed to the corresponding holes 9a and such that their leading threaded portions are fastened by the corresponding nipples 5, which are mounted in the two neighbouring holes 3, belonging to the respective block b.  As a result, each group C is composed of eight spokes 1, which is twice as many spokes as used in the prior art embodiment, as shown in Figure 7.

It is to be noted that although the invention thus far described has irregular pitches, the fastening holes as provided in the rim, may be spaced at the same pitch all over the rim, as shown in Figure 4.   In such an embodiment therefore, the pitch between neighbouring spokes is equal to the pitch between neighbouring groups C, so that all the spokes of the wheel are arranged at the same pitch.

Moreover, although each block b thus far described is composed of two spokes 1, each may comprise, if necessary, an increased number of spokes, three, for example.

As shown in Figure 7, a spoked wheel 6' according to the prior art is constructed such that four spokes forming one group C are fitted respectively in the front and rear sides of the two flanges 9 as formed on a hub 7. In this prior art wheel, the spokes intersect in a complex manner within a restricted area, so that their mounting operations become so complicated as to invite problems. Obviously, said prior art arrangement of the spokes does not permit a remarkable increase in the number of spokes.

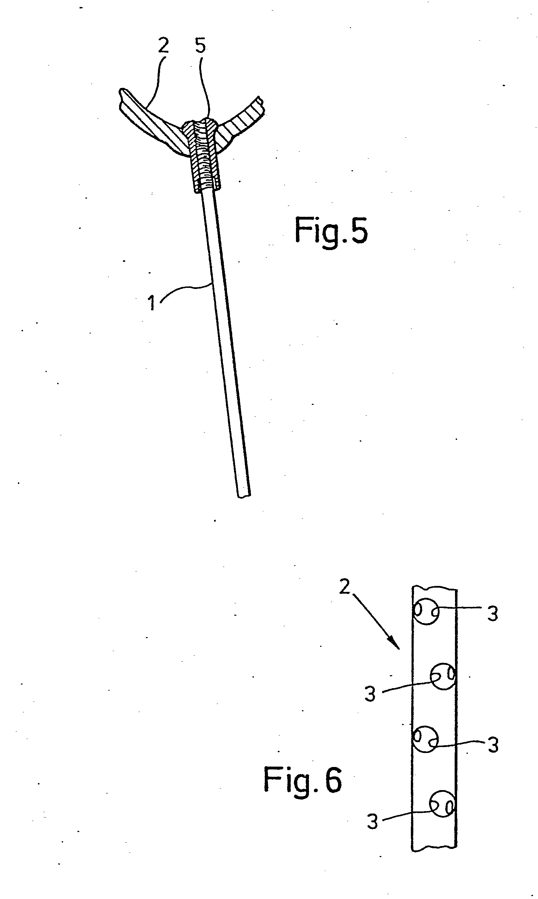

As described hereinbefore, with reference to Figures 1 to 6, according to the present invention, as a plurality of adjacent spokes has been grouped into blocks b, an increased number of spokes can be easily assembled so that thinner spokes can be used whilst being prevented from slackening. Moreover, as the number of groups C decreases, irregular pitches can be easily affected. With these irregular pitches, it is possible to attain an excellent design and provide a convenient location for a valve hole, irrespective of the numerous spokes. The area for said valve hole can be enlarged to permit a reliable injection of air into a tyre after arranging same at the rim.

0039021

Claims:

1. A spoked wheel comprising two flanges (9, 9') formed on a hub (7) and a rim (2) which are connected by means of a number of spokes (1), said spokes being fixed to said rim by means of nipples (5) which are housed in mounting holes as provided in said rim, characterized in that a plurality of adjacent spokes are grouped into one block (b) and in that the spokes belonging to said block are fitted on the same side of the same flange (9 or 9') and are made to extend substantially in the same direction so that they are fastened by means of corresponding nipples to said mounting holes (3) which are formed on a common circumferential line (x or y) of said rim.

2. Spoked wheel according to claim 1, characterized in that said mounting holes (3) belonging to adjacent blocks (b) of spokes (1) are arranged in said rim on circumferential lines (x or y) on different planes such that the blocks are zigzagged.

3. Spoked wheel according to claim 1 or 2, characterized in that four adjacent blocks (b) of spokes (1) are grouped into one group (C) and the pitch between the adjacent groups (C) is larger than the pitch between each of the spokes which form any of said groups (C).

4. Spoked wheel according to one of claims 1 to 3, characterized in that the pitch between adjacent groups (C) of spoke blocks (b) is twice as large as the pitch between the spokes (1) which are comprised within any of said groups.

Fig. 1

0039021

Fig.2

Fig.3

Fig.4

Fig.5

Fig.6

Fig.7